# EUROPEAN PATENT SPECIFICATION

(11) **EP 0 883 014 B1**
(45) Date of publication and mention of the grant of the patent: **08.01.2003**
(21) Application number: 98116593.9
(22) Date of filing: 05.10.1993
(51) Int. Cl.: G02C 7/04

(54) **Contact lens**
Kontaktlinse
Lentille de contact

(43) Date of publication of application: 09.12.1998
(62) Divisional of application: 93116083.2
(73) Proprietor: Menicon Co., Ltd., Nagoya-shi Aichi-ken (JP)
(72) Inventor: Onogi, Takayuki, Menicon Co. Ltd., Naka-ku, Nagoya-shi, Aichi-ken (JP); Yamashita, Keiji, Menicon Co. Ltd., Shinhazama, Seki-Shi, Gifu-ken (JP); Miyamura, Kazuya, Menicon Co. Ltd., Shinhazama, Seki-Shi, Gifu-ken (JP)
(74) Representative: Hartz, Nikolai F., Dr.

(56) References cited:
- GB-A- 2 041 557
- US-A- 4 095 878
- US-A- 4 618 229
- US-A- 4 813 777

## Description

The present invention relates to a contact lens for correcting astigmatism or presbyopia. More particularly, it relates to a toric contact lens or a multifocal (bifocal) contact lens capable of preventing its rotation on the eye during use.

The astigmatism is a state that parallel beams do not form an image at a point and the presbyopia is a state that a man becomes inability to attain a sharp focus for near vision due to the reduction of elasticity of he crystalline lens. In order to correct the astigmatism or presbyopia, glasses or a contact lens is usually used.

As a contact lens to correct the astigmatism, there is known a toric contact lens wherein the radius of curvature of the inner (back) and/or the outer (front) surfaces is different from each other in terms of two orthogonally intersecting meridians.

As a contact lens to correct the presbyopia, there is known a multifocal (bifocal) contact lens wherein a plurality of areas of the degree of lens power are formed at the inner (back) and/or outer (front) surfaces in order to see near and distant objects.

For a patient of astigmatism, it is necessary to wear a toric contact lens at a correct position on a human eye.

There are various kinds of multifocal contact lens to be worn by patients of presbyopia, some kinds of multifocal contact lens have to be worn at a fixed position to human eyes in the same manner as the toric contact lens. The multifocal contact lens of the above-mentioned kind is such that the areas of the different degrees of lens power formed in the contact lens are not at the positions of rotation symmetry when the lens is viewed from the front side. When glasses are used, a frame holding lenses is fitted to the ears or the nose. Accordingly, the correct position of the lenses can be assured. However, when a toric contact lens or a certain kind of multifocal contact lens is used, there is no means to fix the lenses, and accordingly, the contact lenses tend to rotate on the eye, whereby it may not obtain proper correction.

For the toric contact lens or the multifocal contact lens, there have been proposed various improvements to prevent the rotation of the lens on the eye. The proposed improvements can be generally classified into two types.

The first type is called a ballast type wherein the lower portion of the contact lens is made relatively heavy to thereby prevent the rotation of the lens on the eye (the cornea). A bifocal (multifocal) type contact lens 31 (Figure 7) which belongs this type, has been known (for instance, in Japanese Examined Patent Publication No. 18531/1962).

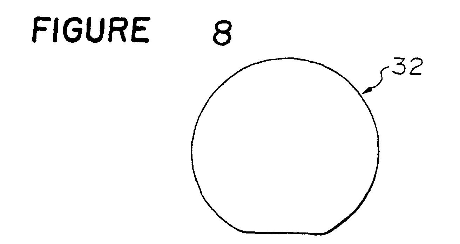

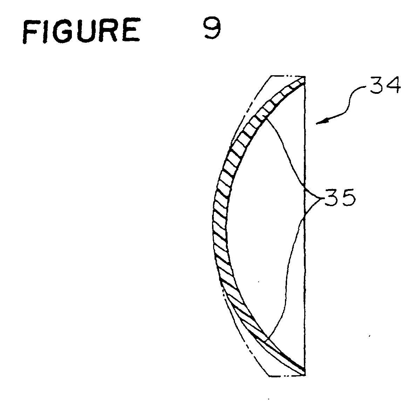

The second type is such one as to correspond to the shape of the eye of a wearer so that the rotation of the lens on the cornea can be prevented. The second type can also be classified into two types: a truncation type and a slab-off type. In the truncation type, a cut portion (a truncated portion) 33 is formed at a part of the outer periphery of a contact lens (Figure 8), which is disclosed in, for instance, Japanese Unexamined Utility Model Publication No. 13048/1973). In the slab-off type, a thin portion 35 is formed in a contact lens 34 (Figure 9) which is disclosed in, for instance, Japanese Unexamined Utility Model Publication No. 133151/1975.

In the ballast type contact lens, the thickness in a portion of the lens is increased to shift the gravity center to the lower portion. Therefore, the ballast type contact lens has a disadvantage that a wearer may feel a pressure on the eye, discomfort or pain. In order to improve the discomfort, a so-called prism ballast type contact lens is proposed wherein the central axis of the outer surface of the contact lens is deviated from the central axis of the inner surface so that the thickness of the lens is gradually increased downwardly. The proposed prism ballast type contact lens has, however, such a disadvantage that when a lens is designed in accordance with the parameters (such as the degree of lens power), there may result a thicker portion in the lens, to which a wearer can not endure. Further, as the thickness of the lens is increased, an amount of oxygen to be transmitted therethrough is reduced, whereby the cornea may be injured.

On the other hand, since the truncation type contact lens is so formed that the peripheral region of the lens in a plane view is not smooth, a wearer may feel discomfort when the lens is worn. In order to improve the feeling of wearing, it is necessary to finish the truncated portion smoothly. However, it requires high skill and technique. Further, even though a truncated portion having a smooth surface is formed, sufficient effect can not be expected depending on the shape of eyelid of a wearer.

In the slab-off type contact lens, there is no problem on the feeling of wearing. However, the contact lens has its gravity center which coincides with geometric center. Accordingly, there is a problem of stability because the lens may rotate on the cornea when the eye blinks.

In order to solve the problems of the ballast type, the truncation type and the slab-off type contact lens as described above, a technique in combination of the ballast type and the slab-off type has been proposed as follows.

Firstly, in U.S.P. 4,324,461, a thin wall portion (hereinbelow, referred to as a slab-off portion) is formed at the upper portion of a lens to shift the gravity center downwardly.

Secondly, in U.S.P. 5,020,898, slab-off portions are formed at the upper and lower portions of a lens to thereby shift the gravity center downwardly. In these proposals, however, it is difficult to assure a proper deviation of the gravity center necessary for preventing the rotation of the lens on the cornea. Further, excellent and stable eyesight may not be obtained.

There is another proposal wherein a slab-off portion is formed in the lower portion of the lens and a prism is formed in the lens to make the lower portion of the lens heavy (U.S.P. 4,508,436 and U.S.P. 4,573,774). In the proposal, however, the position of the gravity center is moved upwardly since the slab-off portion is formed in the lower portion of the lens, whereby there is little effect to prevent the rotation of the lens on the eye.

It is an object of the present invention to eliminate the problems of the above-mentioned techniques and to provide a thin toric or multifocal (bifocal) contact lens for certainly preventing the rotation on the cornea, and to provide a method of designing and producing such a lens, providing comfort feeling and assuring safe use.

Conventionally, a prism ballast type contact lens, which is stabilized such as to prevent the rotation of the lens by forming a prism ballast, has been so designed and developed as to how much amount of prism is formed, i.e., depending on a quantity of prism (a degree of prism diopter). The inventors of the application have completed the present invention from a new viewpoint. Namely, they have considered how much amount of a deviation rate or an offset is resulted by the employment of a prism ballast, and have designed and developed the lens so that a suitable effect of ballast can be obtained by making the lens thin as possible.

The shift or the offset means the percentage of the distance (deviation quantity) between the geometric center of the lens in the front view of the lens and the gravity center with respect to the total diameter of the lens. Namely, when the gravity center of the contact lens having a total diameter of 14 mm is offset by 0.6 mm from the geometric center, the shift is 0.6 ö 14 × 100 = 4.3 (%). In this case, the deviation quantity is 0.6 mm. As a result, the inventors have found that sufficient stability to the rotation of the lens can be obtained by determining the shift of the centre of gravity from the geometric center of the lens in a range from 2.5% to 7.5% which is applicable to the parameters for all toric contact lenses.

In accordance with the present invention, there is provided a method of producing a toric or multifocal (bifocal) contact lens according to claims 1 and 2.

In drawings:
Figure 1 is a front view showing a first embodiment of the toric contact lens according to the present invention;
Figure 2 is a cross-sectional view taken along a line II-II of the toric contact lens in Figure 1;
Figure 3 is a front view showing another embodiment of the toric contact lens according to the present invention;
Figure 4 is a front view showing another embodiment on the multifocal (bifocal) contact lens according to the present invention;
Figure 5 is a front view showing a still another embodiment of the multifocal (bifocal) contact lens according to the present invention;
Figure 6 is a flowchart showing steps of designing the toric contact lens of the present invention;

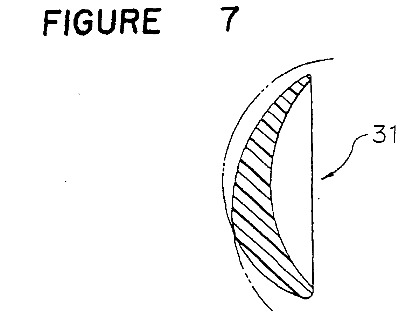

Figure 7 is a cross-sectional view of a conventional contact lens;
Figure 8 is a front view showing another conventional contact lens; and
Figure 9 is a cross-sectional view showing another conventional contact lens.

Preferred embodiments of the contact lens according to the present invention will be described with reference to the drawings.

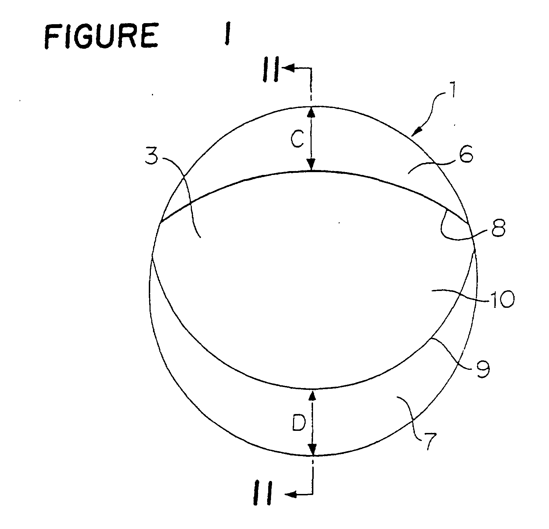

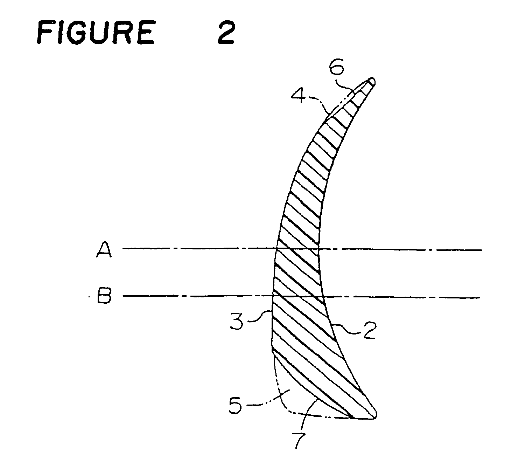

As shown in Figures 1 and 2, a toric contact lens 1 has a prism ballast shape as a whole. Namely, the inner surface (back surface) 2 and the outer surface (front surface) 3 of the lens 1 are respectively formed of a spherical surface and a toric surface wherein the central axis B of the outer surface 3 is determined at a position lower than the central axis A of the inner surface 2, and the both central axis A, B extend in parallel. Accordingly, the thickness of the toric contact lens 1 increases downwardly whereby the gravity center is shifted downwardly (Figure 2). Further, spherical cut surfaces 6, 7 (surfaces resulted by forming slab-off portions) are formed respectively in upper and lower slab-off portions 4, 5 of the toric contact lens 1. Numeral 8 designates the border line between the outer surface 3 and the cut surface 6, and numeral 9 designates the boarder line between the outer surface 3 and the cut surface 7. The region 10 surrounded by the border lines 8 and 9 provides an effective optical zone which actually performs function as a contact lens.

The outer surface 3 is provided with a toric surface which comprises curved surfaces having different radius of curvatures in the directions of two orthogonally intersecting meridians. The toric surface corrects astigmatism. Accordingly, it is easy to form the toric surface by a lathe cutting process in comparison with the forming of it in the inner surface 2.

In the toric contact lens having the above-mentioned construction, the same effect of preventing the rotation as the ballast type is obtainable since the toric contact lens is formed to have a prism ballast shape as a whole whereby the gravity center is shifted downwardly. Further, since the upper and lower peripheral portions are shaved or cut, the shift of the centre of gravity of the lens is smaller than that of the prism ballast type. Accordingly, the largest thickness of the toric contact lens 1 (the thickness of the lowermost portion of the toric lens 1 shown in Figure 2) can be reduced, and at the same time, the thickness in the entire portion of the toric contact lens 1 can be reduced, whereby the feeling of wearing can be improved. Further, an amount of oxygen to be supplied to the cornea can be increased to thereby prevent the cornea from injuring.

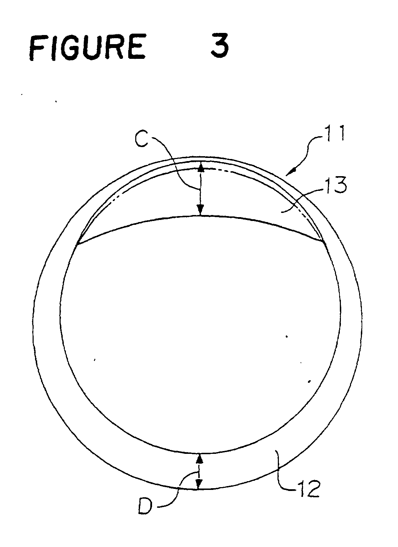

Figure 3 shows another embodiment of the toric contact lens 11 according to the present invention. In this embodiment, the lower slab-off portion extends to the upper portion through both side portions. Namely, a lower cut surface 12 is first formed and then, an upper cut surface 13 is formed. In Figure 3, two-dotted chain line designates the boarder line of the lower cut surface 12 which disappears by the formation of the upper cut surface 13. The toric contact lens 11 performs the same function as the toric contact lens 1.

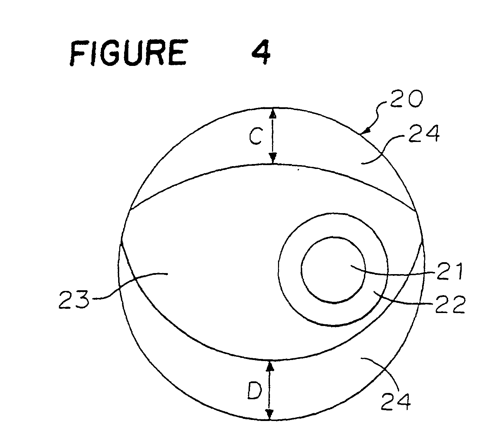

Figure 4 shows a multifocal contact lens 20 for presbyopia as another embodiment of the present invention. The multifocal contact lens 20 has the same prism ballast and slab-off portions (the slab-off portions are indicated by cut surfaces 24) as the toric contact lens, shown in Figure 1. An optical zone is formed between the cut surfaces which are provided at upper and lower portions of the lens. The optical zone is constituted by a near vision correction zone to see near objects, a far vision correction zone to see distant objects and an intermediate distance correction zone 23 having an intermediate function of correction of those of the near vision correction zone 21 and the far vision correction zone 24, which is formed between those zones 21, 24. As is clear from Figure 4, in the optical zone of the contact lens 20, the near vision correction zone 21 and the intermediate distance correction zone 23 are shifted to the right side (the nose side) so as to be easy to watch near objects in a time of reading a book, for instance.

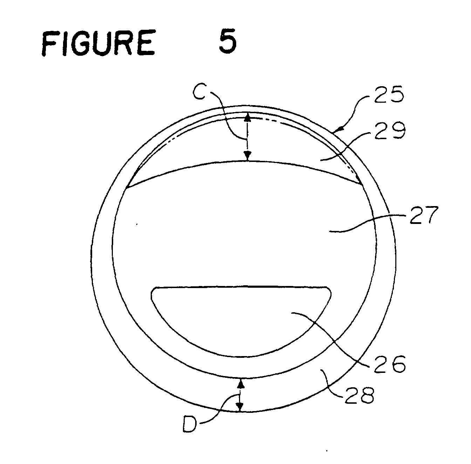

Figure 5 shows a multifocal (bifocal) contact lens 25 for presbyopia as another embodiment of the present invention. In this embodiment, the contact lens 25 has the same prism ballast and slab-off portions (the slab-off portions are indicated by cut surfaces 28, 29) as the toric contact lens 11 shown in Figure 3. Numeral 26 designates a near vision correction zone to see near objects formed at the front side of the contact lens 25, and numeral 27 designates a far vision correction zone to see distant objects. As is clear from Figure 5, the contact lens 25 has the near vision correction zone 26 at its lower position so as to be capable of seeing near objects in a time of reading a book, for instance.

In either of the multifocal (bifocal) contact lenses shown in Figure 4 and 5, areas having different degree of lens power are not at positions of rotation symmetry in the front view of the lens. They are of a type that it is necessary for a wearer to wear it at a fixed eye position, in the same manner as the toric contact lens.

The downward shift of the centre of gravity of the lens is selected from the range of 2.5% - 7.5% of the diameter of the lens because when the shift exceeds 7.5%, the lens becomes thick by the requirement in the parameters, and on the other hand, when it is less than 2.5%, a sufficient effect of ballast can not be obtained. In order to effectively obtain stability on the rotation of the lens, it is preferable to select the shift in a range of 3.5 - 5.5%.

The ballast formed in the contact lens of the present invention is of the prism ballast type. Accordingly, the surface of the lens is very smooth unlike the conventional contact lens wherein the lower portion is simply weighed. Accordingly, the feeling of wearing is further improved.

In designing the contact lens 1, 11, 20 or 25 having the construction described above, the percentage of the shift of the gravity centre of the lens is first determined. Then, the deviation quantity of the lens (namely, the distance of the gravity center from the geometric center) is calculated so as to obtain the predetermined shift of the lens. Then, the prism quantity of the lens and the width of slab-off portions are set. It is natural to consider the deviation quantity of the lens due to the toric or multifocal (bifocal) surface in the designing of the contact lens 1, 11, 20 or 25.

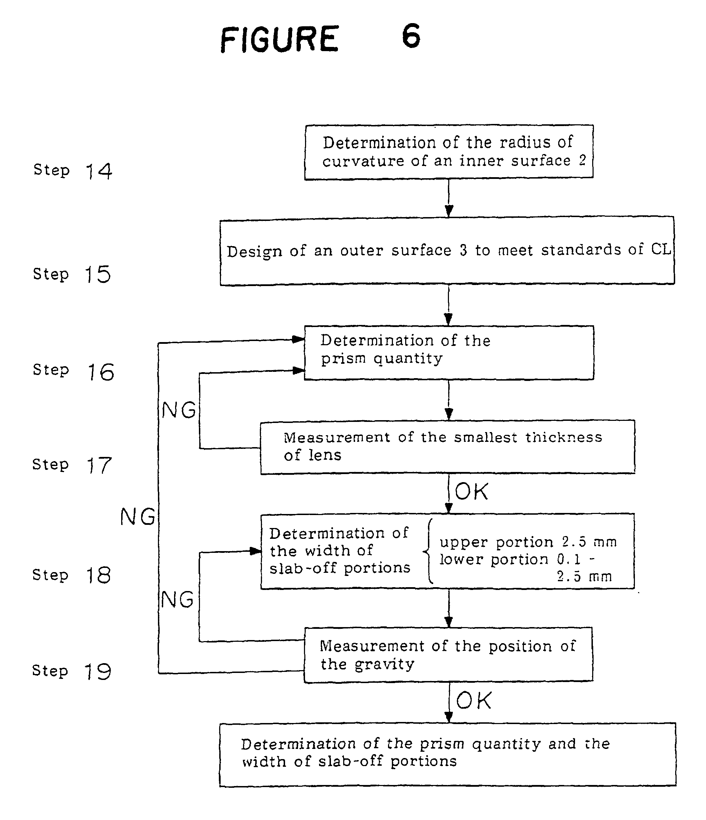

A flowchart in Figure 6 shows preferred steps of the design for the toric contact lens.

First, the smallest thickness tₘᵢₙ of the toric contact lens 1 by which the necessary strength can be obtained is set. The smallest thickness tₘᵢₙ varies depending on material used and is set in consideration of various conditions. Further, a desired deviation quantity H for the lens is also set.

Then, the radius of curvature of the inner surface 2, i.e. the base curve (BC) is set so as to meet the shape of the cornea of a wearer (Step 14).

In the following, the outer surface 3 is so designed as to meet desired parameters of contact lens (e.g. the degree of spherical power, the degree of cylindrical power, the axis of correction for astigmatism and so on) in consideration of the previously set base curve (Step 15).

Then, the prism quantity (the degree of prism diopter) is optionally set (Step 16).

Then, the thickness of the lens is measured (Step 17). Since the toric contact lens 1 is formed to have a prism ballast, the geometric center of the inner surface 2 does not coincide with that of the outer surface 3. Accordingly, since the position where the thickness of the lens is the smallest is a position other than the geometric center or the spherical portion of the contact lens, the smallest thickness of the lens is set by examining the thickness of the lens at various positions. As a result, when the smallest value in the thickness t of the lens indicates the smallest thickness portion tₘᵢₙ, the next step is taken. Otherwise, the procedure is returned to Step 16 to set the prism quantity (the degree of prism) again.

Then, the width of the upper and lower slab-off portions is set (Step 18). In the setting, the width of the upper slab-off portion (the width C in Figures 1 and 3) should be maintained to be greater as possible to thereby obtain a large deviation quantity, which can further improve the effect of preventing the rotation. Accordingly, a large value (e.g. 2.5 mm) should be previously set, however, the value may be an optional value.

Then, the position of gravity center (deviation quantity) is calculated (Step 19). In the calculation, when the deviation quantity assumes a deviation quantity H, which has been initially set, or higher, the prism quantity (the degree of prism diopter) and the width of the slab-off portions which have been obtained in the previous steps are set as formal values. When the deviation quantity is less than H, the sequential step is returned to Step 18 where the width of the slab-off portions is set again. In this case, when the width C of the upper slab-portion is 2.5 mm, the width D of the lower slab-off portion (Figure 1 and Figure 3) is limited to 0.1 mm - 2.5 mm so that the effective width of the optical portion 10 of the toric contact lens 1 can be assured.

In case that a desired deviation quantity can not be obtained even by the operation at Step 18, the sequential step is returned to Step 16 where the prism quantity (the degree of prism) is set again.

When there is scattering in dimension of the toric contact lens designed by the above-mentioned steps and by using the same parameter, the toric contact lens 1 having the smallest thickness is employed in consideration of the thickness at various positions (the thickness at the central portion, the peripheral portions and so on) of the lens.

In manufacturing the toric contact lens 1 designed by the above-mentioned steps, a lathe cutting process or a molding process which can render the manufacture easy may be used.

The multifocal (bifocal) contact lens of the present invention can be designed in the same manner as the toric contact lens described above. Further, it can be manufactured by either process of lathe cutting or molding.

In the embodiments described above, description has been made as to the contact lens in which the toric or multifocal (bifocal) surface is formed in the outer surface. However, the present invention is not limited to the embodiments, and a toric or multifocal (bifocal) surface may be formed in the inner surface or both surfaces.

According to the toric or multifocal (bifocal) contact lens of the present invention, the following advantages are obtainable. The rotation of the lens can be effectively prevented. Excellent feeling of wearing is obtainable. It is safe in use because a sufficient amount of oxygen to the cornea can be assured. Further, the flexibility of the design is obtainable because restriction to the parameter of the lens can be substantially expanded. Further, since the prism quantity (the degree of prism) can be smaller than in the conventional technique an adverse optical effect such as polarization can be reduced.

## Claims

1. A method of designing a contact lens having a prism ballast shape wherein the gravity center of the lens is shifted downwardly from its geometric center, **characterized by** comprising:
(a) a step of setting the radius of curvature of an inner surface of the Iens so as to meet the shape of the cornea of a wearer;
(b) a step of setting the radius of curvature of an outer surface of the lens based on the radius of curvature set in the above step so as to meet desired parameters of contact lens;
(c) a step of setting a prism quantity of the lens;
(d) a step of setting the smallest thickness of the lens;
(e) a step of setting widths of upper and lower slab-off portions of the lens; and
(f) a step of setting the position of the gravity centre of the lens such that the shift of the gravity centre of the lens from its geometric centre is in the range from 2.5% to 7.5% of the diameter of the contact lens.

2. A method of producing a contact lens having a prism ballast shape wherein the gravity center of the lens is shifted downwardly from its geometric center, **characterized by** comprising:
(a) a step of setting the radius of curvature of an inner surface of the lens so as to meet the shape of the cornea of a wearer;
(b) a step of setting the radius of curvature of an outer surface of the lens based on the radius of curvature set in the above step so as to meet desired parameters of contact lens;
(c) a step of setting a prism quantity of the lens;
(d) a step of setting the smallest thickness of the lens;
(e) a step of setting widths of upper and lower slab-off portions of the lens;
(f) a step of setting the position of the gravity centre of the lens such that the shift of the gravity centre of the lens from its geometric centre is in the range from 2.5% to 7.5% of the diameter of the contact lens; and
(g) a step of forming the contact lens by shaving or molding after conducting the above steps.

## Patentansprüche

1. Verfahren eines Konstruierens oder Aufbauens einer Kontaktlinse, die eine Form eines Prismas mit einer Last aufweist, wobei der Schwerpunkt der Linse von seiner geometrischen Mitte nach unten verschoben ist, **dadurch gekennzeichnet, dass** das Verfahren folgendes umfasst:
(a) einen Schritt eines Festsetzens des Krümmungsradius einer Innenoberfläche der Linse, so dass er an die Form der Hornhaut des Auges einer die Linse tragenden Person angepasst ist;
(b) einen Schritt eines Festsetzens des Krümmungsradius einer Außenoberfläche der Linse basierend auf dem Krümmungsradius, der in dem obigen Schritt festgesetzt wurde, so dass gewünschte Parameter der Kontaktlinse eingehalten werden;
(c) einen Schritt eines Festsetzens einer Prismagröße oder Prismastärke der Linse;
(d) einen Schritt eines Festsetzens der geringsten Dicke der Linse;
(e) einen Schritt eines Festsetzens der Ausdehnungen oder Breiten der oberen und unteren abgetragenen oder abgeschälten Bereiche der Linse; und
(f) einen Schritt eines Festsetzens der Position des Schwerpunkt der Linse, so dass die Verschiebung des Schwerpunkts der Linse von ihrer geometrischen Mitte in dem Bereich von 2,5% bis 7,5% des Durchmessers der Kontaktlinse beträgt.

2. Verfahren einer Herstellung einer Kontaktlinse, die eine Form eines Prismas mit einer Last aufweist, wobei der Schwerpunkt der Linse von seiner geometrischen Mitte nach unten verschoben ist, **dadurch gekennzeichnet, dass** das Verfahren folgendes umfasst:
(a) einen Schritt eines Festsetzens des Krümmungsradius einer Innenoberfläche der Linse, so dass er an die Form der Hornhaut des Auges einer die Linse tragenden Person angepasst ist;
(b) einen Schritt eines Festsetzens des Krümmungsradius einer Außenoberfläche der Linse basierend auf dem Krümmungsradius, der in dem obigen Schritt festgesetzt wurde, so dass gewünschte Parameter der Kontaktlinse eingehalten werden;
(c) einen Schritt eines Festsetzens einer Prismagröße oder Prismastärke der Linse;
(d) einen Schritt eines Festsetzens der geringsten Dicke der Linse;
(e) einen Schritt eines Festsetzens der Ausdehnungen oder Breiten der oberen und unteren abgetragenen oder abgeschälten Bereiche der Linse;
(f) einen Schritt eines Festsetzens der Position des Schwerpunkt der Linse, so dass die Verschiebung des Schwerpunkts der Linse von ihrer geometrischen Mitte in dem Bereich von 2,5% bis 7,5% des Durchmessers der Kontaktlinse beträgt; und
(g) einen Schritt eines Formens der Kontaktlinse durch Nachschneiden oder Abschälen oder Formen oder Nachformen nach der Durchführung der obigen Schritte.

## Revendications

1. Procédé de conception d'une lentille de contact ayant une forme à ballast et prisme, dans lequel le centre de gravité de la lentille est décalé vers le bas depuis son centre géométrique, **caractérisé en ce qu'**il comprend :
(a) une étape de réglage du rayon de courbure d'une surface interne de la lentille de manière à épouser la forme de la cornée d'un utilisateur;
(b) une étape de réglage du rayon de courbure d'une surface externe de la lentille sur la base du rayon de courbure réglé à l'étape précédente de manière à répondre aux paramètres souhaités de la lentille de contact;
(c) une étape de réglage de la quantité de prisme de la lentille;
(d) une étape de réglage de l'épaisseur la plus petite de la lentille;
(e) une étape de réglage des largeurs des parties amincies supérieure et inférieure; et
(f) une étape de réglage de la position du centre de gravité de la lentille, de sorte que le décalage du centre de gravité de la lentille par rapport à son centre géométrique se situe dans la plage de 2,5% à 7,5% du diamètre de la lentille de contact.

2. Procédé de production d'une lentille de contact ayant une forme à ballast et prisme dans lequel le centre de gravité de la lentille est décalé vers le bas depuis son centre géométrique, **caractérisé en ce qu'**il comprend
(a) une étape de réglage du rayon de courbure d'une surface interne de la lentille de manière à épouser la forme de la cornée d'un utilisateur;
(b) une étape de réglage du rayon de courbure d'une surface externe de la lentille sur la base du rayon de courbure réglé à l'étape précédente de manière à répondre aux paramètres souhaités de la lentille de contact;
(c) une étape de réglage de la quantité de prisme de la lentille;
(d) une étape de réglage de l'épaisseur la plus petite de la lentille;
(e) une étape de réglage des largeurs des parties amincies supérieure et inférieure;
(f) une étape de réglage de la position du centre de gravité de la lentille, de sorte que le décalage du centre de gravité de la lentille depuis son centre géométrique se situe dans la plage de 2,5% à 7,5% du diamètre de la lentille de contact; et
(g) une étape de formation de la lentille de contact par découpe ou moulage après réalisation des étapes mentionnées ci-dessus.
